# FASCICULE DE BREVET EUROPEEN

(11) **EP 1 808 285 B1**
(45) Date de publication et mention de la délivrance du brevet: **17.03.2010**
(21) Numéro de dépôt: 06290107.9
(22) Date de dépôt: 17.01.2006
(51) Int. Cl.: B29C 65/02, B29C 65/48, B29C 45/14, B60R 7/00, B60R 21/00, B29K 105/06, B29K 105/10, B29K 105/26, B29L 31/30

(54) **Pièce thermoplastique renforcée**
Verstärkter Kunststoffgegenstand
Reinforced plastic piece

(43) Date de publication de la demande: 18.07.2007
(73) Titulaire: MECAPLAST SAM, MC-98000 Monaco (MC)
(72) Inventeur: Georgi, Frédéric, 06560 Valbonne (FR); Morando, Patrick, 06100 Nice (FR)
(74) Mandataire: Hirsch & Associés

(56) Documents cités:
- EP-A- 0 296 283
- EP-A- 0 339 494
- DE-A1- 10 059 160
- DE-C- 848 705
- FR-A- 2 483 343
- FR-A- 2 504 449
- FR-A- 2 638 467
- FR-A- 2 734 201
- FR-A- 2 876 945
- GB-A- 2 168 643
- US-A- 4 966 802
- PATENT ABSTRACTS OF JAPAN vol. 013, no. 133 (M-809), 4 avril 1989 (1989-04-04) & JP 63 302023 A (HONDA MOTOR CO LTD), 8 décembre 1988 (1988-12-08)

## Description

La présente invention concerne une pièce thermoplastique renforcée adaptée à supporter de fortes charges. Une telle pièce peut être destinée à une utilisation comme pièce d'automobile, de chariot ou de tout autre dispositif nécessitant un renforcement localisé pour supporter de fortes charges.

Certaines pièces automobiles d'habitacle et de coffre, telles que les planchers de charge ou les tablettes arrière par exemple, doivent pouvoir supporter des charges lourdes comme des bagages et sont soumises à d'importantes contraintes mécaniques, en particulier des contraintes de rigidité, de flèche résiduelle et de résistance au fluage. Pour satisfaire à ces contraintes mécaniques, il est connu de réaliser ces pièces dans des matériaux présentant des modules de Young élevés, comme les matériaux thermodurcissables.

Ces matériaux thermodurcissables à module de Young élevé présentent cependant l'inconvénient de ne pas pouvoir être facilement recyclés. De plus, les pièces précitées étant souvent visibles dans un véhicule automobile, elles sont également soumises à des contraintes esthétiques. Il est alors contraignant pour le concepteur d'être limité dans son choix de matériaux aux seuls matériaux présentant les qualités mécaniques suffisantes.

Une solution connue pour réaliser ce type de pièce, dite semi structurelle, est de les fabriquer dans des matériaux ne présentant pas de module Young spécialement élevée, et d'obtenir la rigidité souhaitée grâce à la géométrie de la pièce. Par exemple le brevet FR-A-2 734 201 décrit une tablette double coque constituée de deux parois solidarisées l'une à l'autre en de multiples points ou portions de surface de sorte à ménager des volumes de vide entre lesdites parois. C'est la multiplicité des points ou portions de surfaces de contact entre les parois qui contribue à rigidifier l'ensemble. Une telle tablette mono-matériau peut facilement être recyclée. Mais de telles tablettes présentent un encombrement important en épaisseur, qui n'est pas toujours compatible avec l'espace disponible dans le véhicule. En particulier pour rigidifier un plancher de charge, l'épaisseur nécessaire est telle que cette solution ne peut pas être appliquée.

Une autre solution connue consiste à réaliser ce type de pièce semi structurelle avec des renforts rapportés. La pièce est alors constituée de deux éléments assemblés, à savoir un corps de pièce, tel qu'un plateau réalisé dans un matériau léger satisfaisant aux contraintes esthétiques mais sans contraintes de rigidité particulières, et des renforts réalisés dans un matériau à module de Young élevé. Ce type de pièce est fréquemment utilisé dans des coffres de véhicule, par exemple pour des tablettes arrière réalisées en polypropylène (PP) avec des renforts métalliques. De telles pièces satisfont pleinement aux contraintes de rigidité. Cependant, l'utilisation de deux familles de matériaux complique le recyclage de ces pièces : la pièce doit être démontée, les matériaux doivent être séparés, afin que chacun suive la filière de recyclage appropriée.

Il existe par ailleurs des éléments de renfort en matériau thermodurcissable présentant un module de Young élevé réalisés par pultrusion d'un matériau composite comprenant des fibres de verre. De tels éléments sont par exemple décrits dans la demande de brevet FR-A-2 483 343 pour un pare-choc et dans la demande de brevet EP-A-0 980 801 pour un renfort d'essuie-glace. Les matériaux composites utilisés dans ces demandes sont obtenus par pultrusion de fibres de verre imprégnées de résine. Ces éléments de renfort ne répondent cependant à aucune contrainte esthétique et sont assemblés avec des pièces intermédiaires aux pièces de véhicule qu'elles renforcent. De tels éléments composites ne peuvent pas être assemblés directement avec une pièce thermoplastique à renforcer.

Le document FR-A-2 504 449 décrit un pare-choc constitué d'une matière thermoplastique renforcée par des fibres. Des pièces accessoires en polymère thermoplastique peuvent être soudées au pare-choc, telles que des flasques latérales, des bossages ou une jupe.

Le document EP-A-0 296 283 décrit un pare-choc comprenant un corps de pièce en résine thermoplastique et un élément de renfort en plastique renforcé par des fibres de verres. L'élément de renfort est obtenu par assemblage de deux pièces elles-mêmes réalisées par moulage.

Le document GB-A-2 168 643 décrit un procédé de mise en forme de feuilles thermoplastiques renforcées par des fibres.

Il existe donc un besoin pour réaliser des pièces thermoplastiques renforcées qui soient esthétiques, légères, recyclables, d'un encombrement limité et de fabrication simplifiée.

A cet effet, l'invention propose une pièce thermoplastique comprenant :
- un corps constitué d'un matériau comprenant une première matrice thermoplastique ;
- au moins un élément de renfort constitué d'un matériau comprenant une deuxième matrice thermoplastique et des fibres continues et sensiblement parallèles les unes aux autres ;
les première et deuxième matrices thermoplastiques étant des matériaux de la même famille et ledit au moins un élément de renfort étant associé de façon irréversible au corps de la pièce, et ledit au moins un élément de renfort, comportant un gainage comprenant un matériau thermoplastique.

Selon les modes de réalisation, la pièce thermoplastique de l'invention peut comprendre une ou plusieurs des caractéristiques suivantes :
- la famille des première et deuxième matrices est choisie parmi les polypropylènes ;
- les première et deuxième matrices thermoplastiques sont constituées du même matériau ;
- l'élément de renfort est soudé au corps de la pièce ;
- l'élément de renfort est monobloc avec le corps de la pièce ;
- l'élément de renfort présente la forme d'un profilé allongé, les fibres continues étant sensiblement parallèles à l'axe longitudinal du profilé de renfort ;
- les fibres constituent entre 20% et 80% en poids de l'élément de renfort;
- les fibres de l'élément de renfort sont choisies parmi les fibres de verre, les fibres minérale, les fibres d'origine végétale et les fibres synthétiques ;
- l'élément de renfort présente un module Young à 23°C compris entre 10000 et 50000 MPa ;
- l'élément de renfort présente une contrainte admissible comprise entre 200 et 900 MPa ;
- l'élément de renfort présente un profil transversal en forme de « Ω », de « I », de « T », de « U », de « V », de « W », de carré, de rectangle ou de cercle ;

L'invention concerne aussi un ensemble comprenant :
- une pièce thermoplastique selon l'une des revendications 1 à 11 ;
- un habillage entourant la pièce.

Selon les modes de réalisation, l'habillage est un caisson ou un tissu,

L'invention propose aussi un procédé de fabrication d'une pièce thermoplastique renforcée, comprenant les étapes consistant à :
- réaliser un corps de pièce comprenant une première matrice thermoplastique ;
- réaliser au moins un élément de renfort comprenant des fibres continues sensiblement parallèles incorporées dans une deuxième matrice thermoplastique, les première et deuxième matrices thermoplastiques étant des matériaux de la même famille ;
- enrober ledit au moins un élément de renfort par un gainage comprenant un matériau thermoplastique;
- associer de façon irréversible ledit au moins un élément de renfort au corps pour constituer une pièce renforcée.

Selon les modes de réalisation, le procédé de l'invention peut comprendre une ou plusieurs des caractéristiques suivantes :
- l'étape de réalisation du corps consiste à injecter une matière thermoplastique dans un moule ;
- l'étape de réalisation de l'élément de renfort comprend des étapes consistant à réunir plusieurs brins de fibres à étirer à travers une filière et à introduire une matière thermoplastique dans la filière ;
- l'étape de réalisation de l'élément de renfort comprend des étapes consistant à réunir plusieurs brins de fibres imprégnés de matière thermoplastique et à étirer lesdits brins de fibre à travers une filière ;
- l'étape de réalisation de l'élément de renfort comprend des étapes consistant à réunir plusieurs brins de fibres et un fil de matière thermoplastique et à étirer lesdits brins et ledit fil simultanément à travers une filière ;
- l'étape d'association de l'élément de renfort au corps comprend une étape de soudage ;
- l'étape d'association de l'élément de renfort au corps comprend une étape de thermocollage ;
- l'étape d'association de l'élément de renfort au corps est conduite simultanément à l'étape de réalisation du corps de la pièce et comprend les étapes consistant à disposer ledit au moins un élément de renfort dans un moule correspondant au corps de la pièce et à thermocomprimer une matière thermoplastique déposée dans le moule.

L'invention concerne aussi l'utilisation d'une pièce thermoplastique selon l'invention ou d'un ensemble selon l'invention pour constituer au moins partiellement une pièce automobile ou au moins partiellement une pièce de chariot.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1, une vue schématique en perspective d'une pièce renforcée selon l'invention ;
- figure 2, une vue schématique détaillée d'un élément de renfort de la pièce de la figure 1 ;
- figures 3 à 6, des schémas de différents modes d'association des éléments de renfort avec le corps de la pièce ;
- figure 7, une vue schématique détaillée d'un mode d'association d'un élément de renfort avec le corps de la pièce.

L'invention propose une pièce thermoplastique comprenant un corps et au moins un élément de renfort. Le corps est constitué d'un matériau comprenant une première matrice thermoplastique et peut présenter les caractéristiques esthétiques et géométriques souhaitées pour la pièce. L'élément de renfort est constitué d'un matériau comprenant une deuxième matrice thermoplastique et des fibres continues et sensiblement parallèles les unes aux autres. L'élément de renfort est associé directement et de façon irréversible au corps de la pièce.

Les première et deuxième matrices thermoplastiques sont choisies telles qu'une association directe et irréversible peut être réalisée entre les éléments de renfort et le corps de la pièce ; en particulier, les première et deuxième matrices thermoplastiques sont des matériaux de la même famille. La fabrication de la pièce renforcée est donc simplifiée, ainsi que son recyclage.

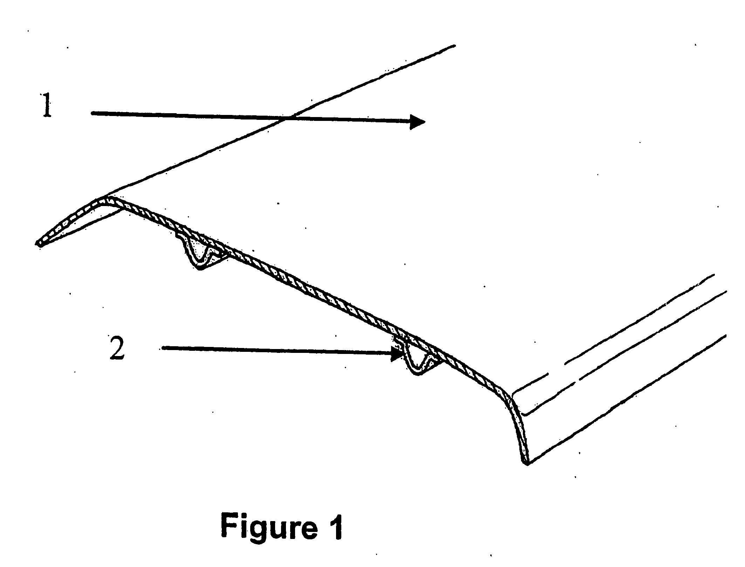

La figure 1 est une vue en perspective d'une pièce renforcée selon l'invention. Une telle pièce pourrait représenter une tablette arrière de véhicule automobile. La pièce thermoplastique comprend un corps 1 constitué d'un matériau comprenant une matrice thermoplastique, par exemple du polypropylène ou tout autre polyoléfine. Des additifs, tels que des pigments de coloration, des charges anti-UV, des agents de texture ou autre, peuvent être ajoutés à la matrice thermoplastique du corps. Le corps 1 de la pièce est représenté comme un plateau, mais il est entendu que toute autre forme pourrait être concernée par l'invention.

La pièce comprend également des éléments de renfort 2 en matériau thermoplastique. Les éléments de renfort sont constitués d'un matériau comprenant une matrice thermoplastique et des fibres continues et sensiblement parallèles les unes aux autres. La matrice thermoplastique des éléments de renfort est choisie de la même famille que la matrice constituant le corps de la pièce, par exemple du polypropylène, du polyamide ou tout autre matériau thermoplastique. Il est entendu qu'un même matériau peut être utilisé pour les matrices thermoplastiques des éléments de renfort et du corps de la pièce. Il est ainsi possible de réaliser une association directe et irréversible entre les éléments de renfort et le corps de la pièce. La pièce peut aussi être recyclée sans démontage.

On entend par association directe et irréversible un assemblage qui présente une adhérence telle que la pièce se casse si l'on tente de désolidariser les éléments de renfort du corps de la pièce. Par exemple, les éléments de renfort 2 peuvent être soudés ou thermocollés au corps 1 de la pièce ou être réalisés monoblocs avec le corps de la pièce. On entend par monobloc dans ce contexte le fait que les éléments de renforts sont assemblés lors de l'étape de formage du corps de la pièce.

Les éléments de renfort 2 présentent la forme d'un profilé allongé, c'est-à-dire avec une longueur plus grande que la largeur et la hauteur, par exemple avec une longueur égale à au moins trois fois la largeur et la hauteur. Les fibres incorporées dans la matrice des éléments de renfort sont disposées sensiblement parallèles à l'axe longitudinal de ce profilé.

Les fibres incorporées dans la matrice des éléments de renfort sont dites continues, c'est-à-dire qu'elles s'étendent globalement sur toute la longueur du profilé de renfort ; elles ne sont pas incorporées en paillettes ou en morceaux dans la matrice thermoplastique. Les fibres sont aussi dites sensiblement parallèles les unes ou autres, c'est-à-dire qu'elles ne sont pas enchevêtrées.

Les fibres des éléments de renfort peuvent être des fibres de verre. On peut également envisager d'utiliser d'autres types de fibres, telles que des fibres minérales comme le carbone, des fibres d'origine végétale comme le lin, le jute, le chanvre, le sisal, ou encore des fibres synthétiques comme l'aramide. Le choix des fibres de renfort dépend des performances mécaniques attendues pour la pièce. La proportion en masse de fibres de verre dans chaque élément de renfort est comprise entre 20% et 80% en poids. La matrice thermoplastique dans laquelle sont noyées les fibres peut être du polypropylène ou tout autre polyoléfine, du polyester, du polyamide ou tout autre matériau thermoplastique.

On a aussi obtenu une pièce thermoplastique renforcée, les éléments de renfort présentant, de par la présence des fibres, un module de Young compris entre 10000 et 50000 MPa, soit un module de Young beaucoup plus élevé que celui du corps de la pièce qui peut être compris entre 500 et 7000 MPa. En outre, la contrainte admissible, c'est-à-dire la force de rupture de l'élément de renfort, se situe entre 200 et 900 MPa. A titre de comparaison, on peut citer les valeurs de l'acier qui présente un module de Young de 200000 MPa et une contrainte admissible de 500 MPa. La combinaison de ces deux caractéristiques, à savoir tenue à la contrainte et élasticité, permet de conférer à la pièce renforcée un rôle de limiteur d'accélération qui trouve des applications particulièrement avantageuses pour des pièces automobiles.

En cas de choc, l'accélération n'est pas directement transmise aux personnes, biens ou pièces mécaniques en contact avec la pièce renforcée car la pièce renforcée résiste et absorbe une partie du choc. De telles pièces renforcées permettent donc d'améliorer la protection des personnes et des biens en contact avec la pièce et permet de réduire le dimensionnement des pièces adjacentes en limitant les efforts transmis. Le ratio module de Young / contrainte admissible des éléments de renfort est plus favorable qu'un renfort métallique pour la maîtrise des efforts. La protection des personnes et le dimensionnement des structures environnantes sont donc améliorés.

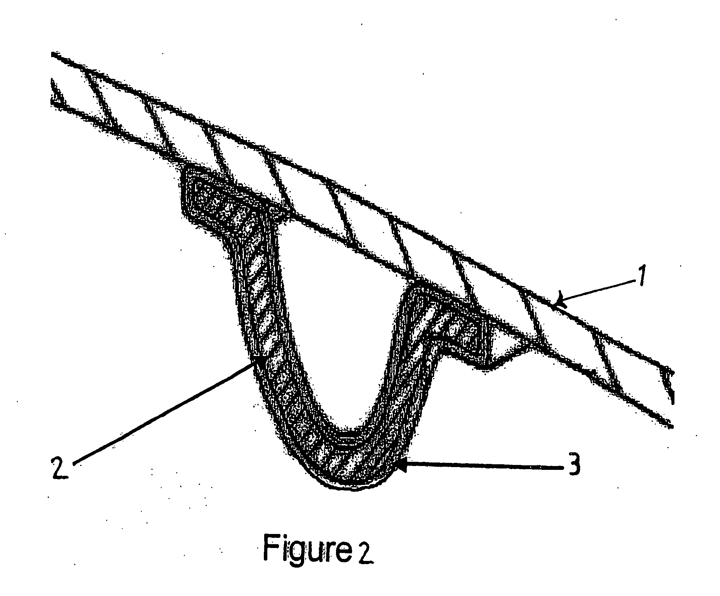

Comme illustré sur la figure 2, les éléments de renfort 2 sont gainés. Les éléments de renfort 2 peuvent être enrobées au moins partiellement par un gainage 3 constitué d'une matière thermoplastique. Le matériau de gainage comprend une matrice thermoplastique compatible avec la matrice thermoplastique l'éléments de renfort, c'est-à-dire de la même famille organique. Le matériau de gainage 3 peut comprendre des additifs, mais est dénué de fibres.

L'élément de renfort est alors constitué d'une âme structurelle 2 et d'une peau d'aspect 3. Cette peau peut permettre d'améliorer les qualités sensorielles des renforts, en particulier sur le plan tactile, par exemple pour un toucher soft, et sur le plan visuel, par exemple un gainage translucide. En plus de ces avantages sensoriels, le gainage 3 peut améliorer les propriétés mécaniques du renfort 2, notamment en augmentant la contrainte admissible par le renfort selon une direction perpendiculaire au sens des fibres, ce qui améliore la cohésion du renfort.

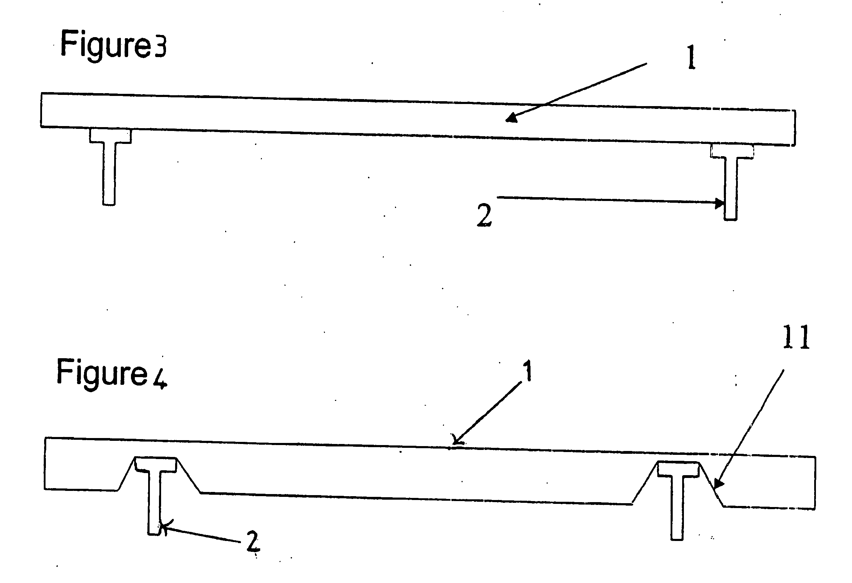

Les figures 3 à 6 illustrent plusieurs modes d'association des renforts 2 avec le corps 1 de la pièce. Il est à noter que les éléments de renfort 2 présentent une forme générale de profilé allongé, c'est-à-dire que leur longueur est largement plus grande que leur largeur et hauteur, et la section transversale des éléments de renfort 2 reste sensiblement constante sur toute la longueur mais la forme peut varier. Par exemple, des profils transversaux en forme de « Ω » (« Oméga »), de « I », de « T », de « U », de « V », de « W », de cercle, de carré, de rectangle ou toute autre forme de parallélépipède peuvent être envisagés.

Sur la figure 3, le corps 1 est une pièce sensiblement plane et les éléments de renforts 2 présentent une section transversale en forme de T, la barre horizontale du T étant soudée au corps 1.

Sur la figure 4, le corps 1 de la pièce est une pièce présentant des nervures 11 et les éléments de renforts 2 présentent une section transversale en forme de T, la barre horizontale du T étant soudée au fond de la nervure 11 du corps 1.

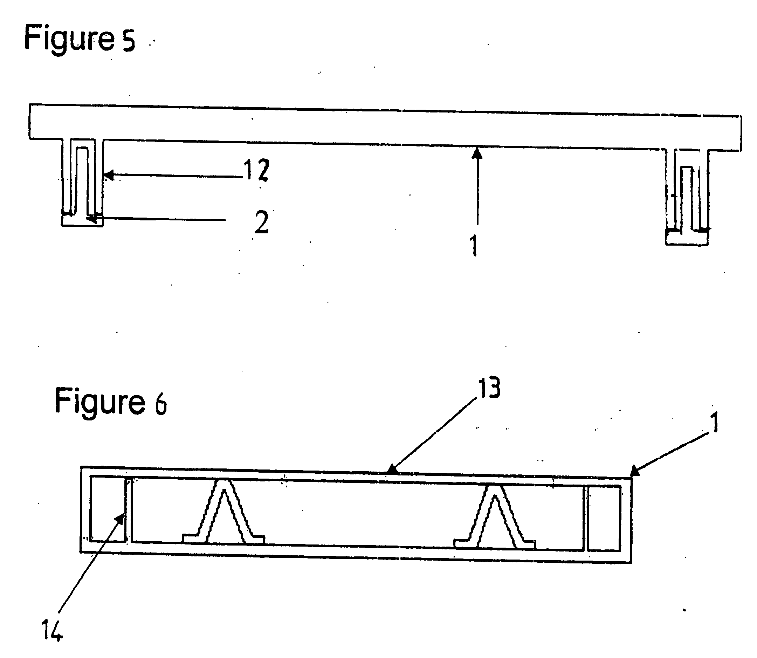

Sur la figure 5, le corps 1 est une pièce présentant des rainures 12 et les éléments de renforts 2 présentent une section transversale en forme de T inversée, la barre verticale du T étant logée dans la rainure 12 du corps 1 et la barre horizontale du T soudée sur l'extrémité des rainures 12.

Sur la figure 6, le corps 1 de la pièce est un plateau double coque 13 à l'intérieur duquel sont intégrés les éléments de renfort 2 présentant une section transversale en forme de V inversée. Les renforts 2 sont de préférence soudés de part et d'autre de la coque 13. Le corps 1 de la pièce peut également comprendre des entretoises 14 ajoutées entre les parois de la double coque 13.

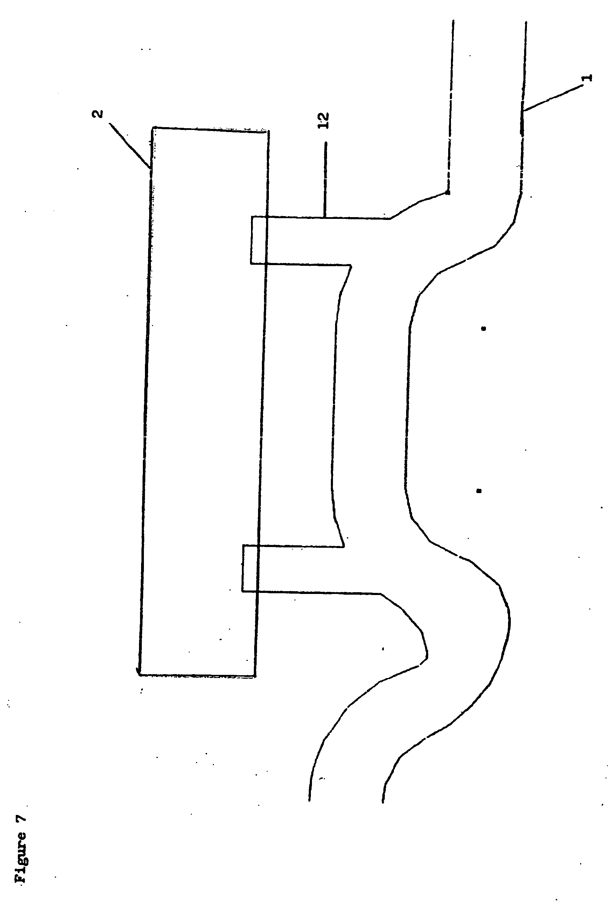

Sur la figure 7, une portion du corps 1 présente une forme non plane, éventuellement une forme en trois dimensions, avec des rainures 12. L'élément de renfort 2 présente une section transversale en forme de rectangle soudé sur l'extrémité des rainures.

Par ailleurs, un ou plusieurs renforts 2 peuvent être galbés longitudinalement, bien que cela ne soit pas illustré sur les figures, par exemple pour s'adapter à un corps 1 galbé. Par exemple, un renfort 2 d'une épaisseur de 1 à 6 mm et d'une largeur quelconque peut être galbé sur toute ou partie de la longueur du corps de pièce.

La géométrie du corps 1, celle des éléments de renfort 2 et les géométries d'association qui en découlent, sont laissées à l'appréciation de l'homme du métier, selon les valeurs de résistance à la flexion à obtenir. La géométrie des renforts est donc choisie en fonction des contraintes mécaniques à respecter, et en particulier la résistance à la flexion à obtenir pour la pièce. Le nombre de renforts, leurs emplacements sur le corps dépendent également de la valeur à respecter en flexion sous charge.

De plus, lors du formage du corps 1 de la pièce, par injection dans un moule par exemple, le corps obtenu peut être déformé par rapport à la forme attendue. L'association des éléments de renfort 2 au corps 1 permet alors de rattraper ces déformations lors du soudage des éléments 2.

Il est à noter que la pièce renforcée selon l'invention, comprenant un corps 1 de pièce et un ou des renforts 2, peut être recouverte, totalement ou partiellement, d'un habillage. Un tel habillage peut être un caisson en matériau thermoplastique ou en matériau fibreux ou en tout autre matériau isolant ; l'habillage peut aussi être un tissu enveloppant la pièce renforcée, tel qu'un feutre par exemple.

La pièce thermoplastique renforcée selon l'invention peut être fabriquée de la manière suivante.

On réalise un corps 1 de pièce comprenant une matière thermoplastique par injection thermoplastique, soufflage, thermoformage, rotomoulage, thermocompression, ou toute autre technologie courante de formage de pièces en matériaux thermoplastiques. Les dimensions et formes du corps de la pièce peuvent être très variables selon les applications envisagées.

La matière du corps 1 de la pièce peut contenir des charges minérales, comme du talc ou du verre, ou végétales. Les charges peuvent être des fibres naturelles cellulosiques, comme le lin, le jute, le sisal, dans des proportions variant entre 30% et 70%, et préférentiellement 50/50. Dans une variante, le corps 1 comprend au moins une couche de matériau non-tissé, un feutre par exemple, et une couche de matière thermoplastique, ceux deux couches étant liées par chauffage puis compactage. Le matériau ainsi obtenu présente un module Young compris entre 500 et 7000 MPa à 23°C (1MPa = 1 N/mm2).

On réalise aussi au moins un élément de renfort 2 comprenant des fibres continues sensiblement parallèles incorporées dans une matrice thermoplastique.

Par exemple, les éléments de renfort 2 peuvent être obtenus par pultrusion. Plusieurs brins de fibres continus sont réunis parallèlement et introduit dans une filière. Une matière thermoplastique peut être introduite dans la filière pendant que les fibres sont étirées pour former l'élément de renfort 2. La forme de la section transversale de l'élément de renfort 2 est fonction du calibre de la filière utilisée. On peut également utiliser un fil composite réunissant des brins de fibre et de matière thermoplastique comme décrit dans la demande de brevet FR-A-2 638 467 et chauffer la ligne en amont de la filière pour ramollir la matière thermoplastique afin d'incorporer les fibres dans le plastique. On peut aussi utiliser des brins de fibres et un fil de matière thermoplastique introduit dans la filière en même temps que les brins de fibres. La matière thermoplastique est chauffée avant introduction dans la filière et les fibres sont incorporées dans le plastique en sortie de la filière.

Comme illustré sur la figure 2, on forme d'abord un profilé dans lequel les fibres et la matière thermoplastique sont rassemblées parallèlement et on introduit ce profilé dans une filière calibrée dans laquelle on introduit simultanément au moins une deuxième matière thermoplastique fondue au contact du profilé pour constituer le gainage.

On associe alors les éléments de renfort au corps pour constituer la pièce renforcée. Une association directe et irréversible peut être obtenue par un soudage, de préférence sans contact tel qu'un soudage par rayonnement infrarouge.

Dans un soudage sans contact, la soudure se fait par rayonnement. De l'énergie sous forme de chaleur est apporté au niveau de la surface de contact pour provoquer une fusion superficielle de la matière. La source d'énergie peut être un laser, un fil émissif infrarouge, un émetteur ultrasons ou haute fréquence, ou autre. Lors de la mise en contact des pièces à souder, il y a interpénétration des surfaces de contact, ce qui se traduit au niveau moléculaire par un enchevêtrement des chaînes de polymères. Au moment du refroidissement, les chaînes de polymères adoptent une nouvelle structure tridimensionnelle assurant ainsi une association directe et irréversible des pièces soudées. Le soudage se fait uniquement par fusion des deux pièces à assembler, sans apport de matières supplémentaire.

L'association des éléments de renfort 2 avec le corps 1 de la pièce peut être réalisée par toute autre technique de soudage appropriée, tels que le soudage miroir ou le soudage par vibration par exemple, et peut également être faite par collage, notamment par collage à chaud (hotmelt). On préférera cependant le soudage au collage car le soudage ne nécessite aucun apport de matière extérieure alors que le collage nécessite une enduction de colle thermoplastique sur au moins l'une des pièces à assembler.

Le soudage ou le collage sera fait entre cette gaine 3 thermoplastique et le corps 1.

Dans un mode de réalisation particulier, lorsque le corps 1 est réalisé par thermoformage ou thermocompression, l'association des éléments de renfort 2 au corps peut se faire directement lors de la mise en forme du corps. On parle alors de procédé en une seule étape, ou « one shot ».

Les éléments de renfort 2 sont fabriqués selon l'un des modes de réalisation précités ou toute autre mode approprié. Les éléments 2 sont ensuite déposés dans le moule destiné à former le corps 1 de la pièce. Le matériau constituant le corps est chauffé au dessus de sa température de fusion et déposé dans le moule froid. Le matériau du corps est alors thermocomprimé dans le moule afin de former le corps en assemblant simultanément les éléments de renfort. La surface des renforts 2 destinée à être adjacente au corps de pièce peut être réactivée, c'est-à-dire chauffée, avant leur mise en place dans le moule pour améliorer l'adhérence entre les renforts et le corps de pièce.

La pièce thermoplastique renforcée selon l'invention peut être utilisée pour les applications suivantes.

La pièce peut constituer au moins partiellement une pièce automobile, telle qu'un hayon de coffre, une tablette arrière, un plancher de coffre, un plancher d'habitacle, un écran sous moteur, une portière, des barres de toit, des barres anti-intrusion, ou toute autre pièce ayant à répondre à un cahier des charges de tenue mécanique ou de résistance aux chocs.

La pièce peut aussi constituer au moins partiellement une pièce de chariot, par exemple un fond ou une poignée, en particulier une poignée télescopique.

Le nombre de renforts et leur emplacement dépend directement de la rigidité souhaitée pour la pièce semi- structurelle. Par exemple, une tablette autoporteuse de dimension 1000 mm * 500 mm * 65 mm sera ainsi avantageusement rigidifiée par deux éléments d'au moins 900 mm de long placés à 200 mm de distance l'un de l'autre.

## Revendications

1. Une pièce thermoplastique comprenant :
- un corps (1) constitué d'un matériau comprenant une première matrice thermoplastique ;
- au moins un élément de renfort (2) constitué d'un matériau comprenant une deuxième matrice thermoplastique et des fibres continues et sensiblement parallèles les unes aux autres ;
les première et deuxième matrices thermoplastiques étant des matériaux de la même famille et ledit au moins un élément de renfort (2) étant associé de façon irréversible au corps de la pièce (1) et ledit au moins un élément de renfort (2) comportant un gainage (3) comprenant un matériau thermoplastique,

2. La pièce thermoplastique de la revendication 1, **caractérisée en ce que** la famille des première et deuxième matrices est choisie parmi les polypropylènes.

3. La pièce thermoplastique de la revendication 1 ou 2, dans laquelle les première et deuxième matrices thermoplastiques sont constituée du même matériau.

4. La pièce thermoplastique de l'une des revendications 1 à 3, **caractérisée en ce que** l'élément de renfort est soudé au corps de la pièce.

5. La pièce thermoplastique de l'une des revendications 1 à 3, **caractérisée en ce que** l'élément de renfort est monobloc avec le corps de la pièce.

6. La pièce thermoplastique de l'une des revendications 1 à 5, **caractérisée en ce que** l'élément de renfort (2) présente la forme d'un profilé allongé, les fibres continues étant sensiblement parallèles à l'axe longitudinal du profilé de renfort.

7. La pièce thermoplastique de l'une des revendications 1 à 6, **caractérisée en ce que** les fibres constituent entre 20% et 80% en poids de l'élément de renfort.

8. La pièce thermoplastique de l'une des revendications 1 à 7, dans laquelle les fibres de l'élément de renfort sont choisies parmi les fibres de verre, les fibres minérales, les fibres d'origine végétale et les fibres synthétiques.

9. La pièce thermoplastique de l'une des revendications 1 à 8, **caractérisée en ce que** l'élément de renfort présente un module Young à 23°C compris entre 10000 et 50000 MPa.

10. La pièce thermoplastique de la revendication 9, **caractérisée en ce que** l'élément de renfort présente une contrainte admissible comprise entre 200 et 900 MPa.

11. La pièce thermoplastique de l'une des revendications 1 à 10, **caractérisée en ce que** l'élément de renfort (2) présente un profil transversal en forme de « Ω », de « 1 », de « T », de « U », de « V », de « W », de carré, de rectangle ou de cercle.

12. Ensemble comprenant :
- une pièce thermoplastique selon l'une des revendications 1 à 11 ;
- un habillage entourant la pièce.

13. Ensemble selon la revendication 12, dans lequel l'habillage est un caisson.

14. Ensemble selon la revendication 12, dans lequel l'habillage est un tissu

15. Procédé de fabrication d'une pièce thermoplastique renforcée, comprenant les étapes consistant à :
- réaliser un corps (1) de pièce comprenant une première matrice thermoplastique ;
- réaliser au moins un élément de renfort (2) comprenant des fibres continues sensiblement parallèles incorporées dans une deuxième matrice thermoplastique, les première et deuxième matrices thermoplastiques étant des matériaux de la même famille ;
- ledit au moins un élément de renfort comportant un gainage comprenant un matériau thermoplastique
- associer de façon irréversible ledit au moins un élément de renfort au corps pour constituer une pièce renforcée.

16. Le procédé de la revendication 15, dans lequel l'étape de réalisation du corps (1) consiste à injecter une matière thermoplastique dans un moule.

17. Le procédé de la revendication 15 ou 16, dans lequel l'étape de réalisation de l'élément de renfort (2) comprend des étapes consistant à réunir plusieurs brins de fibres à étirer à travers une filière et à introduire une matière thermoplastique dans la filière.

18. Le procédé de la revendication 15 ou 16, dans lequel l'étape de réalisation de l'élément de renfort (2) comprend des étapes consistant à réunir plusieurs brins de fibres imprégnés de matière thermoplastique et à étirer lesdits brins de fibre à travers une filière.

19. Le procédé de la revendication 15 ou 16, dans lequel l'étape de réalisation de l'élément de renfort (2) comprend des étapes consistant à réunir plusieurs brins de fibres et un fil de matière thermoplastique et à étirer lesdits brins et ledit fil simultanément à travers une filière.

20. Le procédé de l'une des revendications 15 à 19, dans lequel l'étape d'association de l'élément de renfort au corps comprend une étape de soudage.

21. Le procédé de l'une des revendications 15 à 19, dans lequel l'étape d'association de l'élément de renfort au corps comprend une étape de thermocollage.

22. Le procédé de l'une des revendications 15 à 19, dans lequel l'étape d'association de l'élément de renfort au corps est conduite simultanément à l'étape de réalisation du corps (1) de la pièce et comprend les étapes consistant à disposer ledit au moins un élément de renfort dans un moule correspondant au corps de la pièce et à thermocomprimer une matière thermoplastique déposée dans le moule.

23. Utilisation d'une pièce thermoplastique selon l'une des revendications 1 à 11 ou d'un ensemble selon l'une des revendications 12 à 14 pour constituer au moins partiellement une pièce automobile.

24. L'utilisation de la pièce thermoplastique selon la revendication 23, dans laquelle la pièce automobile est choisie parmi un hayon de coffre, une tablette arrière, un plancher de coffre, un plancher d'habitacle, un écran sous moteur, une portière, des barres de toit, des barres anti-intrusion.

25. Utilisation d'une pièce thermoplastique selon l'une des revendications 1 à 11 ou d'un ensemble selon l'une des revendications 12 à 14 pour constituer au moins partiellement une pièce de chariot.

26. L'utilisation de la pièce thermoplastique selon la revendication 25, dans laquelle la pièce de chariot est choisie parmi un fond ou une poignée,

## Claims

1. A thermoplastic part comprising:
- a body (1) made up of a material comprising a first thermoplastic matrix;
- at least one reinforcing member (2) made up of a material comprising a second thermoplastic matrix and continuous fibres substantially parallel to each other;
the first and second thermoplastic matrices being of materials of the same family and said at least one reinforcing member (2) being irreversibly associated to the body of said part (1) and said at least one reinforcing member (2) including a sheathing (3) comprising a thermoplastic material.

2. The thermoplastic part of claim 1, **characterised in that** the family of the first and second matrices is selected from the group comprising the polypropylenes.

3. The thermoplastic part of claim 1 or 2, in which the first and second thermoplastic matrices are made up of the same material.

4. The thermoplastic part of one of claims 1 to 3, **characterised in that** the reinforcing member is welded to the body of the part.

5. The thermoplastic part of one of claims 1 to 3, **characterised in that** the reinforcing member is integral with the body of the part.

6. The thermoplastic part of one of claims 1 to 5, **characterised in that** the reinforcing member (2) has an elongated profiled shape, the continuous fibres being substantially parallel to the longitudinal axis of the reinforcing profile shape.

7. The thermoplastic part of one of claims 1 to 6, **characterised in that** the fibres make up between 20% and 80% by weight of the reinforcing member.

8. The thermoplastic part of one of claims 1 to 7, in which the fibres of the reinforcing member are selected from glass fibres, inorganic fibres, fibres of plant origin and synthetic fibres.

9. The thermoplastic part of one of claims 1 to 8, **characterised in that** the reinforcing member has a Young's modulus at 23° comprised between 10,000 and 50,000 MPa.

10. The thermoplastic part of claim 9, **characterised in that** the reinforcing member has an acceptable strain comprised between 200 and 900 MPa.

11. The thermoplastic part of one of claims 1 to 10, **characterised in that** the reinforcing member (2) has an "Ω", "I", "T", " U", " V", "W", square, rectangular or circular- shaped cross section.

12. An assembly comprising:
- a thermoplastic part according to one of claims 1 to 11;
- an enclosure surrounding the part.

13. The assembly according to claim 12, in which the enclosure is a casing.

14. The assembly according to claim 12, in which the enclosure is a fabric.

15. A method for producing a reinforced thermoplastic part, comprising the steps of:
- making a body (1) of the part comprising a first thermoplastic matrix;
- making at least one reinforcing member (2) comprising substantially parallel continuous fibres embedded in a second thermoplastic matrix, the first and second thermoplastic matrices being materials of the same family;
- said at least one reinforcing member including a sheathing comprising a thermoplastic material
- irreversibly associating said at least one reinforcing member to said body in order to constitute a reinforced part.

16. The method according to claim 15, in which the step of making said body (1) consists in injecting a thermoplastic material into a mould.

17. The method of claim 15 or 16, in which the step of making said reinforcing member (2) includes the steps of joining several lengths of fibre strand for pulling through a die, and introducing a thermoplastic material into the die.

18. The method of claim 15 or 16, in which the step of making said reinforcing member (2) includes the steps of joining several fibre strands impregnated with thermoplastic material and pulling said fibre strands through a die.

19. The method of claim 15 or 16, in which the step of making said reinforcing member (2) includes joining several fibre strands and a thermoplastic materials thread, and pulling said strands and the said thread simultaneously through a die.

20. The method of one of claims 15 to 19, in which the step of associating the reinforcing member to said body includes a welding step.

21. The method of one of claims 15 to 19, in which the step of associating the reinforcing member to the body includes a thermal bonding step.

22. The method of one of claims 15 to 19, in which the step of associating the reinforcing member to said body is carried out simultaneously with the step of making said body (1) of the part, and includes arranging said at least one reinforcing member in a mould corresponding to the body of the part, and subjecting a thermoplastic material deposited in the mould to thermal compression.

23. The use of a thermoplastic part according to one of claims 1 to 11 or an assembly according to one of claims 12 to 14 to at least partially constitute an automobile part.

24. The use of a thermoplastic part according to claim 23, in which the automobile part is selected from a boot or trunk lid, a rear parcel shelf, a boot or trunk floor, a passenger compartment floor, a sub-engine screen, a vehicle door, roof rack bars, and anti-intrusion bars.

25. The use of a thermoplastic part according to one of claims 1 to 11 or of an assembly according to one of claims 12 to 14 to make up a least partially apart of a cart.

26. The use of the thermoplastic part according to claim 25, in which the part of the cart is selected from a base or a handle.

## Patentansprüche

1. Thermoplastisches Werkstück, umfassend:
- einen Körper (1), der aus einem Material gebildet ist, das eine erste thermoplastische Matrix umfasst;
- mindestens ein Verstärkungselement (2), das aus einem Material gebildet ist, das eine zweite thermoplastische Matrix und im Wesentlichen untereinander parallele Endlosfasern umfasst;
wobei die erste und die zweite thermoplastische Matrix Materialen aus der gleichen Familien sind und das mindestens eine Verstärkungselement (2) irreversibel mit dem Körper des Werkstücks (1) assoziiert ist, und das mindestens eine Verstärkungselement (2) eine Hülle (3) aufweist, die ein thermoplastisches Material umfasst.

2. Thermoplastisches Werkstück aus Anspruch 1, **dadurch gekennzeichnet, dass** die Familie der ersten und zweiten Matrix aus Polypropylenen ausgewählt ist.

3. Thermoplastisches Werkstück aus Anspruch 1 oder 2, wobei die erste und die zweite thermoplastische Matrix aus dem gleichen Material bestehen.

4. Thermoplastisches Werkstück aus Anspruch 1 bis 3, **dadurch gekennzeichnet, dass** das Verstärkungselement an den Körper des Werkstücks geschweißt ist.

5. Thermoplastisches Werkstück aus einem der Ansprüche 1 bis 3, **dadurch gekennzeichnet, dass** das Verstärkungselement einstückig mit dem Körper des Werkstücks ausbildet ist.

6. Thermoplastisches Werkstück aus einem der Ansprüche 1 bis 5, **dadurch gekennzeichnet, dass** das Verstärkungselement (2) die Form eines Längsprofils aufweist, wobei die Endlosfasern im Wesentlichen parallel zur Längsachse des Verstärkungsprofils verlaufen.

7. Thermoplastischer Werkstoff aus einem der Ansprüche 1 bis 6, **dadurch gekennzeichnet, dass** die Fasern zwischen 20 Gew.-% und 80 Gew.-% des Verstärkungselements bilden.

8. Thermoplastisches Werkstück aus einem der Ansprüche 1 bis 7, wobei die Fasern des Verstärkungselements aus Glasfasern, Mineralfasern, Fasern pflanzlichen Ursprungs und synthetischen Fasern ausgewählt sind.

9. Thermoplastisches Werkstück aus einem der Ansprüche 1 bis 8, **dadurch gekennzeichnet, dass** das Verstärkungselement ein Elastizitätsmodul bei 23 °C im Bereich zwischen 10.000 und 50.000 MPa aufweist.

10. Thermoplastisches Werkstück aus Anspruch 9, **dadurch gekennzeichnet, dass** das Verstärkungselement eine zulässige Beanspruchung im Bereich zwischen 200 und 900 MPa aufweist.

11. Thermoplastisches Werkstück aus einem der Ansprüche 1 bis 10, **dadurch gekennzeichnet, dass** das Verstärkungselement (2) ein Querprofil in Form eines "Ω", "I", "T", "U" "V" "W" eines Quadrats, Rechtecks oder eines Kreises aufweist.

12. Baugruppe umfassend:
- ein thermoplastisches Werkstück nach einem der Ansprüche 1 bis 11;
- eine Verkleidung, die das Werkstück umgibt.

13. Baugruppe nach Anspruch 12, wobei die Verkleidung ein Gehäuse ist.

14. Baugruppe nach Anspruch 12, wobei die Verkleidung ein Gewebe ist.

15. Verfahren zur Herstellung eines verstärkten thermoplastischen Werkstücks, das die folgenden Schritte umfasst, die darin bestehen:
- einen Körper (1) des Werkstücks auszuführen, der eine erste thermoplastische Matrix umfasst;
- mindestens ein Verstärkungselement (2) auszuführen, das Endlosfasern umfasst, die im Wesentlichen parallel sind und in eine zweite thermoplastische Matrix inkorporiert sind, wobei die erste und die zweite thermoplastische Matrix aus Materialen der gleichen Familie sind;
- wobei das mindestens eine Verstärkungselement eine Hülle aufweist, die ein thermoplastisches Material umfasst;
- das mindestens eine Verstärkungselement mit dem Körper irreversibel zu assoziieren, um ein verstärktes Werkstück zu bilden.

16. Verfahren nach Anspruch 15, wobei der Schritt des Ausführens des Körpers (1) darin besteht, ein thermoplastisches Material in eine Form zu injizieren.

17. Verfahren nach Anspruch 15 oder 16, wobei der Schritt des Ausführens des Verstärkungselements (2) Schritte umfasst, die darin bestehen, mehrere Faserstränge zu vereinen, die durch eine Düse gezogen werden und ein thermoplastisches Material in die Düse einzuführen.

18. Verfahren nach Anspruch 15 oder 16, wobei der Schritt des Ausführens des Verstärkungselements (2) Schritte umfasst, die darin bestehen, mehrere Faserstränge zu vereinen, die mit thermoplastischem Material imprägniert sind, und die Faserstränge durch eine Düse zu ziehen.

19. Verfahren nach Anspruch 15 oder 16, wobei der Schritt des Ausführens des Verstärkungselements (2) Schritte umfasst, die darin bestehen, mehrere Faserstränge und einen Faden aus thermoplastischem Material zu vereinen, und die Stränge und den Faden gleichzeitig durch eine Düse zu ziehen.

20. Verfahren nach einem der Ansprüche 15 bis 19, wobei der Schritt der Assoziation des Verstärkungselements mit dem Körper einen Schritt des Schweißens umfasst.

21. Verfahren nach einem der Ansprüche 15 bis 19, wobei der Schritt der Assoziation des Verstärkungselements mit dem Körper einen Schritt des Heißklebens umfasst.

22. Verfahren nach einem der Ansprüche 15 bis 19, wobei der Schritt der Assoziation des Verstärkungselements mit dem Körper gleichzeitig mit dem Schritt der Ausführung des Körpers (1) des Werkstücks durchgeführt wird, und die Schritte umfasst, die darin bestehen, das mindestens eine Verstärkungselement in einer Form anzuordnen, die dem Körper des Werkstücks entspricht, und ein thermoplastisches Material, das in die Form gegeben wurde, zu thermokomprimieren.

23. Verwendung eines thermoplastischen Werkstücks nach einem der Ansprüche 1 bis 11 oder eines Bauteils nach einem der Ansprüche 12 bis 14, um mindestens teilweise ein Fahrzeugteil zu bilden.

24. Verwendung des thermoplastischen Teils nach Anspruch 23, wobei das Fahrzeugteil ausgewählt ist aus einer Kofferraumklappe, einer Kofferraumabdeckung, einem Kofferraumboden, einem Fahrzeuginnenraumboden, einer Schutzplatte unter dem Motor, einer Wagentüre, einem Gepäckträger, Seitenschutzprofilen.

25. Verwendung eines thermoplastischen Werkstücks nach einem der Ansprüche 1 bis 11 oder eines Bauteils nach einem der Ansprüche 12 bis 14, um mindestens teilweise ein Wagenteil zu bilden.

26. Verwendung des thermoplastischen Werkstücks nach Anspruch 25, wobei das Wagenteil aus einem Boden oder einem Griff ausgewählt ist.
